# EUROPEAN PATENT SPECIFICATION

(11) **EP 4 416 424 B1**
(45) Date of publication and mention of the grant of the patent: **28.10.2026**
(21) Application number: 22777679.6
(22) Date of filing: 19.09.2022
(51) Int. Cl.: F21V 8/00

(54) **LIGHT GUIDE**
LICHTLEITER
GUIDE DE LUMIÈRE

(30) Priority: 13.10.2021 FI 20216059
(43) Date of publication of application: 21.08.2024
(73) Proprietor: Nanocomp Oy Ltd., 80710 Lehmo (FI)
(72) Inventor: ORAVA, Joni, 80260 Joensuu (FI); HONKANEN, Marko, 82210 Suhmura (FI)
(74) Representative: Papula Oy
(86) International application number: PCT/FI2022/050624
(87) International publication number: WO 2023/062270

(56) References cited:
- EP-A1- 2 940 377
- WO-A1-2021/151009
- WO-A2-02/04858
- US-A1- 2001 053 075
- US-A1- 2020 319 391
- US-B2- 7 712 932

## Description

### TECHNICAL FIELD

The present disclosure relates to the field of optics, and more particularly to a light guide for display illumination and a display arrangement.

### BACKGROUND

In display technology, obtaining an even illumination of a display introduces numerous technical challenges. Typically, the display is illuminated using light-emitting diodes (LEDs). Since LEDs are discrete elements, each producing a distinct beam of light, further manipulation of the light emitted by the LEDs is needed in order to obtain even illumination of the display. However, different types of LEDs may be needed even for a single display for different function of the display. This introduces additional challenges for the optical design since the design may need to be different for different types of LEDs.

Publication US2001/053075 A1 discloses light redirecting films including a pattern of individual optical elements of well-defined shape on the light exit surface of the films for refracting the light entering the entrance surface of the films from a backlight toward a direction normal to the exit surface. The individual optical elements overlap and intersect each other. Also, the orientation, size and/or shape of the optical elements may be tailored to redirect more of the incident light from the backlight within a desired viewing angle.

Publication US7712932 B2 discloses light redirecting films that have a thin optically transparent substrate having a light entrance surface and an opposite light exit surface, at least one of the surfaces including a pattern of individual optical elements of well-defined shape having two differently curved surfaces. The individual optical elements are quite small in size relative to the length and width of the substrate, and redistribute light passing through the substrate in a predetermined angular distribution. The individual optical elements may be distributed on the surface of the substrate such that some intersect each other, or the placement may be randomized.

Publication US2020/319391 A1 discloses wide-area solid-state illumination devices and systems employing a light guide formed by a sheet of an optically transmissive material and selectively patterned in designated areas. Printed light extraction features are used to form a plurality of patterned areas are separated from each other and from edges of the light guide by separation areas which are generally free from the light extraction features. One or more light emitting diodes (LEDs) is optically coupled to the light guide and provides a light source. The light guide is sandwiched between a front sheet and a reflective back sheet. The front sheet includes opaque areas and a plurality of optically transmissive areas disposed in registration with the patterned areas.

Publication WO2021/151009 A1 discloses a reflective microprism scattering element based backlight, a multiview display, and a method backlight operation including reflective microprism reflective scattering elements configured to provide emitted light having a predetermined light exclusion zone. The reflective microprism scattering element based backlight includes a light guide configured to guide light and a plurality of the reflective microprism scattering elements having sloped reflective sidewalls configured to reflectively scatter out the guided light as the emitted light. The sloped reflective sidewalls of the reflective microprism scattering elements are configured to provide the predetermined light exclusion zone of the emitted light.

Publication WO02/04858 A2 discloses a backlight including a lightguide, a light source disposed with respect to the lightguide to introduce light into the lightguide and a turning film. Optical structures are formed in one of an output surface and a back surface of the lightguide. The optical structures are arranged to extract light from the lightguide. A back reflector is disposed adjacent the back surface. The optical structures are formed to include a varying pattern arranged to mask non-uniformities in the output of the lightguide.

Publication EP 2940377 A1 discloses a light guide including opposed major surfaces and a light input edge extending therebetween. An array of micro-optical elements of well-defined shape at least one of the opposed major surfaces corresponds to the light input edge. Each of the micro-optical elements in the array includes a longitudinal axis arranged within the range of angles relative to the light input edge. A path linearly extending along the light guide from the light input edge intersects at least a portion of the micro-optical elements in the array, at least one of the micro-optical elements along the path arranged with its longitudinal axis at a positive angle relative to the light input edge, and at least another one of the micro-optical elements along the path arranged with its longitudinal axis at a negative angle relative to the light input edge.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide a light guide for display illumination and a display arrangement. The foregoing and other objects are achieved by the features of the independent claim 1. Further implementation forms are apparent from the dependent claims, the description and the figures.

According to second aspect, a display arrangement comprises a display element and the light guide according to the first aspect.

Many of the attendant features will be more readily appreciated as they become better understood by reference to the following detailed description considered in connection with the accompanying drawings.

### DESCRIPTION OF THE DRAWINGS

In the following, example embodiments are described in more detail with reference to the attached figures and drawings, in which:
Fig. 1 illustrates a perspective view of a light guide for display illumination according to non-claimed embodiment;
Fig. 2 illustrates a schematic representation of a light guide for display illumination;
Fig. 3 illustrates a schematic representation of an oval angle-selective out-coupling element according to an embodiment;
Fig. 4 illustrates a schematic representation of a rectangular angle-selective out-coupling element according to an embodiment;
Fig. 5 illustrates a schematic representation of a triangular angle-selective out-coupling element according to an embodiment;
Fig. 6 illustrates a schematic representation of a quadrilateral angle-selective out-coupling element according to an embodiment;
Fig. 7 illustrates a schematic representation of angle-selective out-coupling elements in various angles according to an embodiment;
Fig. 8 illustrates a schematic representation of angle-selective out-coupling elements in positive and negative angles according to an embodiment;
Fig. 9 illustrates a cross-sectional representation of an angle-selective out-coupling element according to an embodiment;
Fig. 10 illustrates a cross-sectional representation of an angle-selective out-coupling element according to another embodiment;
Fig. 11 illustrates a cross-sectional representation of an angle-selective out-coupling element with curved sides according to an embodiment;
Fig. 12 illustrates a schematic representation of an out-coupling arrangement comprising angle-selective out-coupling elements according to an embodiment;
Fig. 13 illustrates a schematic representation of an out-coupling arrangement comprising angle-selective out-coupling elements according to another embodiment; and
Fig. 14 illustrates a schematic representation of an out-coupling arrangement comprising angle-selective out-coupling elements according to another embodiment.

In the following, identical reference signs refer to similar or at least functionally equivalent features.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures.

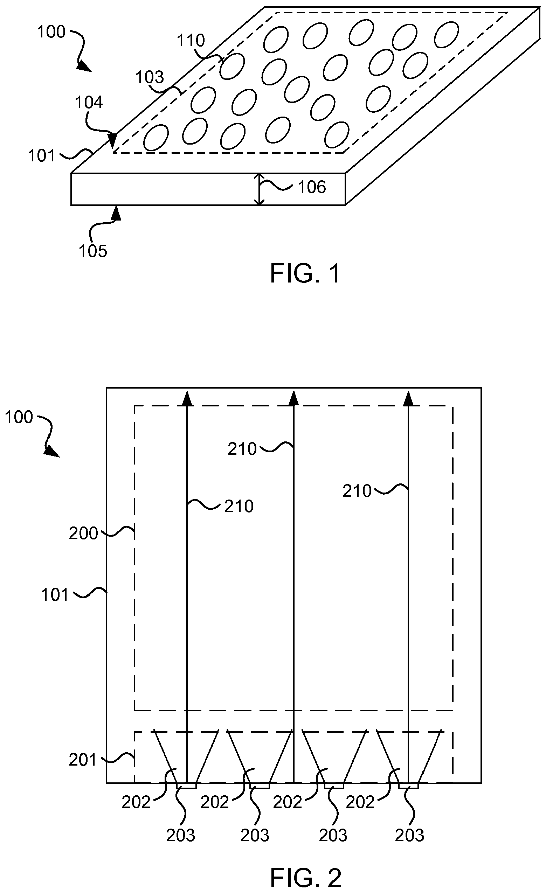

Fig. 1 illustrates a perspective view of a light guide for display illumination according to a non claimed embodiment.

According to an embodiment, a light guide for display illumination comprises a light guide plate 101 with an in-coupling region for coupling light from a plurality of light sources into the light guide plate 101 enabling the light to propagate inside the light guide plate along at least a main propagation direction. The light guide plate 101further comprises an illumination region. The light guide plate 101 has a first main surface 104 and a second main surface 105 opposite to the first main surface 104 and separated therefrom by a thickness 106 of the light guide plate 101.

The plurality of light sources may comprise, for example, a plurality of light-emitting diodes (LEDs) and/or any other type of light sources.

The light guide plate 101 may be a planar structure. Thus, the dimensions of the light guide plate 101 may be greater in the two dimensions perpendicular to the thickness direction of the light guide plate 101 than the thickness 106 of the light guide plate 101.

The light guide 100 may further comprise an out-coupling arrangement 103 for coupling at least part of the light propagating in the light guide plate 101, and interacting with the out-coupling arrangement 103, out of the light guide plate 101 in the illumination region. The out-coupling arrangement 103 may comprise a plurality of angle-selective out-coupling elements 110 protruding from the first main surface 104 of the light guide plate 101, each angle-selective out-coupling element 110 having a long axis and a short axis in a plane of the light guide plate 101. Each angle-selective out-coupling element 110 may be configured to out-couple light from the light guide plate via refraction at side surfaces of the angle-selective out-coupling element 110. An angle between the short axis of each angle-selective out-coupling element 110 and the main propagation direction is a function of a distance of the angle-selective out-coupling element 110 from the in-coupling region.

The angle-selective out-coupling elements 110 may comprise any elements for which the strength of the out-coupling of the light is proportional to the angle between the angle-selective out-coupling element and the propagation direction of the light being out-coupled.

The plane of the light guide plate 101 may be the plane defined by the two directions in which the dimensions of the light guide plate 101 are greater than in the third dimension.

The short axis may refer to an axis along which the dimension of the angle-selective out-coupling element is less than in the dimension along the long axis. The short axis and the long axis may be perpendicular to each other. The short axis may be along the smallest dimension of the angle-selective out-coupling element and/or the long axis may be along the largest dimension of the angle-selective out-coupling element.

According to an embodiment, the light guide plate 101 comprises polycarbonate (PC), polylactic acid (PCA), poly(methyl methacrylate) (PMMA), and/or polyethylene terephthalate (PET).

According to an embodiment, each angle-selective out-coupling element 110 comprise an ultraviolet-curing material.

Further, there may be a layer of ultraviolet-curing material under the angle-selective out-coupling elements 110. Thus, the total thickness of the ultraviolet-curing material may be greater than the thickness/height of the angle-selective out-coupling elements 110.

Since the angle between the short axis of each angle-selective out-coupling element 110 and the main propagation direction is a function of a distance of the angle-selective out-coupling element 110 from the in-coupling region, the angle changes as a function of the distance from the in-coupling region. Thus, the angle is different for angle-selective in-coupling elements 110 at different distances from the in-coupling region.

The angle between the short axis of each angle-selective out-coupling element 110 and the main propagation direction may be a continuous function or a discontinuous function of the distance of the angle-selective out-coupling element 110 from the in-coupling region.

In addition to changing as a function of the distance from the in-coupling region, the angle may also change, for example, in a direction perpendicular to the main propagation direction. For example, at the edges of the light guide plate 101, it may be beneficial to change the angle in a different manner than in the middle of the light guide plate 101.

According to an embodiment, a display arrangement comprises a display element and the light guide 100.

Fig. 2 illustrates a schematic representation of a light guide for display illumination

The plurality of light sources 203 may form beams 202 in the in-coupling region 201. For example, if the light sources 203 are LEDs, radiant intensity and/or luminous intensity the light sources may be follow the cosine emission law. This can be observed as the beams 202. The width of each beams 202 may be, for example, approximately 40 degrees.

The in-coupling region 201 may refer to any region of the light guide plate 101 suitable for in-coupling light into the light guide plate 101. For example, the light may be in-coupled from a side surface, perpendicular to the first main surface 104 and the second main surface 105, of the light guide plate 101 as illustrated in the embodiment of Fig. 2.

In some embodiments, the plurality of light sources may be embedded into the light guide plate 101.

The main propagation direction 210 may refer to the direction along which the light in the light guide plate 101 is mostly propagating. For example, in the embodiment of Fig. 2, the light is in-coupled to the light guide plate 101 at a side surface of the light guide plate 101. Thus, the main propagation direction 210 is opposite to the normal vector of the surface via which the light is in-coupled to the light guide plate 101 when the normal vector points outwards from the surface in question. The main propagation direction 210 may be considered the average of all directions at which the light propagates inside the light guide plate 101.

The region where the beams 202 of the plurality of light sources 203 cross each other for the first time may be referred to as a first order crosshatch. Further along the main propagation direction 210, the beams 202 crossover each other at various distances from the in-coupling region 201. These may be referred to as higher order crosshatches. Due to the crosshatches, the intensity of the light in the light guide plate 101 is uneven. Thus, if the light is out-coupled from the light guide plate 101 in a homogeneous and/or isotropic manner, the distribution of the out-coupled light is uneven. This may also be referred to as the so-called mura effect.

The mura effect can also be affected by, for example, the distance between the light sources 203, i.e. the pitch, the refractive index of the light guide plate 101, the evenness of the surface via which the light from the plurality of light sources 203 is in-coupled into the light guide plate, and the distance between the plurality of light sources 203 and the light guide plate 101.

The light guide 100 can achieve reduction in the mura effect and more even illumination via the angle-selective out-coupling elements 110 the angle of which is a function of the distance from the in-coupling region 201.

The angle between the short axis of each angle-selective out-coupling element and the main propagation direction may be configured to improve evenness of the out-coupled light.

The illumination region 200 may refer to any region of the light guide plate 101 at which light is out-coupled from the light guide plate 101 via the out-coupling arrangement 103. Typically, it is not beneficial to out-couple light before the first order crosshatch. Thus, the illumination region 200 may start after the first order crosshatch. The in-coupling region 201 may end at or approximately at the first order crosshatch.

When the angle between the short axis of the angle-selective out-coupling elements 110 and the main propagation direction 210 is a function of the distance from the in-coupling region 201, the configuration of the plurality of light sources 202 may be changed without the need to modify the angle-selective out-coupling elements 110. For example, sets of light sources corresponding to, for example, different colours may be used. The colour temperature of the out-coupled light may then be adjusted by adjusting the light intensity of each set of light sources. The distance/pitch between the plurality of light sources 203 may need to be the same for each set of light sources. The sets of light sources may be used together or separately while the improvement in the mura effect is still achieved. This is not typically possible using, for example, isotropic structures, since such structures can reduce the mura effect only for a single light source configuration. Further, different types of light sources, such as LEDs may be used. For example, a first subset of LEDs may be configured for a first colour temperature and a second subset of LEDs may be configured for a second colour temperature.

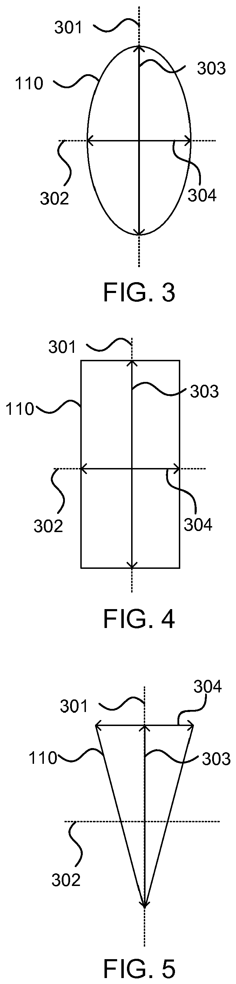

Fig. 3 illustrates a schematic representation of an oval angle-selective out-coupling element according to an embodiment.

According to an embodiment, each angle-selective out-coupling element 110 has a substantially oval, a substantially rectangular, a substantially triangular, a substantially quadrilateral, or a substantially rhombus shape in the plane of the light guide plate 101.

According to an embodiment, for each angle-selective out-coupling element 110, a ratio of a dimension 303 of the angle-selective out-coupling element 110 along the long axis 301 to a dimension 304 of the angle-selective out-coupling element 110 along the short axis 302 is greater than three, greater than four, and/or greater than five.

The ratio of the dimension 303 of the angle-selective out-coupling element 110 along the long axis 301 to the dimension 304 of the angle-selective out-coupling element 110 along the short axis 302 may vary, for example, as a function of the distance from the in-coupling region 201 and/or in a direction perpendicular to the main propagation direction 210. For example, at least some of the angle-selective out-coupling elements 110 may change from an elliptical shape to a circular shape in a continuous manner.

In the example embodiment of Fig. 3, the elliptical shape of the angle-selective out-coupling element 110 causes out-coupling of the element to be angle-selective. Light propagating in the light guide plate 101 along the short axis 302 interacts more strongly with the angle-selective out-coupling element 110, and therefore out-couples more strongly, than light propagating along the long axis 301. Thus, when the angle-selective out-coupling element 110 is rotated, the out-coupling of light in each possible propagation angle in the light guide plate 101 changes.

Fig. 4 illustrates a schematic representation of a rectangular angle-selective out-coupling element according to an embodiment.

As illustrated in the embodiment of Fig. 4, the short axis 302 may be along a first set of two opposing sides of the rectangular angle-selective out-coupling element 110 and the long axis 301 may be along a second set of two opposing sides of the rectangular angle-selective out-coupling element 110. Thus, the dimension 304 along the short axis 302 may correspond to a distance between the second set of two opposite sides of the rectangular angle-selective out-coupling element 110 and the dimension 303 along the long axis 301 may correspond to a distance between the first set of two opposing sides of the rectangular angle-selective out-coupling element 110.

Fig. 5 illustrates a schematic representation of a triangular angle-selective out-coupling element according to an embodiment.

As illustrated in the embodiment of Fig. 5, the triangular angle-selective out-coupling element 110 may form an isosceles triangle. The short axis 302 may be along the side of the isosceles triangle that is not of equal length to the other sides, and the long axis 301 may be along the height of the isosceles triangle. The dimension 304 along the short axis 302 may correspond to the width of the isosceles triangle and the dimension 303 along the long axis 301 may correspond to the height of the isosceles triangle.

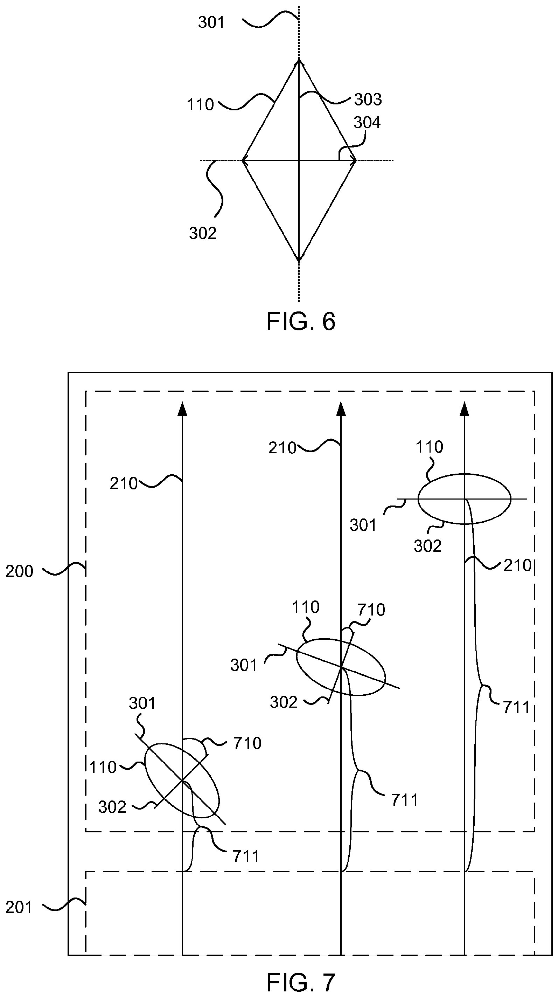

Fig. 6 illustrates a schematic representation of a quadrilateral angle-selective out-coupling element according to an embodiment.

As illustrated in the embodiment of Fig. 6, the short axis 302 may go through a first set of two opposing corners of the quadrilateral angle-selective out-coupling element 110 and the long axis 301 may go through a second set of two opposing corners of the quadrilateral angle-selective out-coupling element 110. Thus, the dimension 304 along short axis 302 may correspond to a distance between the first set of two opposite corners of the quadrilateral angle-selective out-coupling element 110 and the dimension 303 along the long axis 301 may correspond to a distance between the second set of two opposing corners of the quadrilateral angle-selective out-coupling element 110.

Generally, the angle-selective out-coupling elements 110 may be of any size. However, large angle-selective out-coupling elements may result in a sparse arrangement of angle-selective out-coupling elements 110, which may result in a so-called sparkling effect.

The dimensions of each angle-selective out-coupling element along the short axis 302 and/or the long axis 301 may be, for example, from few micrometres (µm) to hundreds of micrometres. For example, the dimension 304 of each angle-selective out-coupling element 110 along the short axis 302 may be in the range 1 - 50 µm, in the range 1 - 20 µm, in the range 1 - 10 µm, in the range 2 - 10 µm, or in the range 2 - 20 µm. For example, the dimension 303 of each angle-selective out-coupling element 110 along the long axis 301 may be in the range 1 - 500 µm, in the range 1 - 200 µm, in the range 1 - 100 µm, in the range 10 - 200 µm, in the range 10 - 100 µm, in the range 20 - 200 µm, or in the range 20 - 50 µm.

Although the shape of the angle-selective out-coupling elements 110 may be illustrated comprising sharp corners in the embodiments of Figs. 4 - 6, in practical implementations, such sharp corners may be rounded due to, for example, limitations of the used manufacturing method. Herein, when the shape of the angle-selective out-coupling elements 110 in the plane of the light guide plate 101 is referred to begin substantially a specific geometric shape, the shape of the angle-selective out-coupling elements 110 may follow that geometric shape within the limitations of the used manufacturing method. A substantially rectangular shape may refer to a rectangular shape with rounded edges. A substantially triangular shape may refer to a triangular shape with rounded edges. A substantially quadrilateral shape may refer to a quadrilateral shape with rounded edges. A substantially rhombus shape may refer to a rhombus shape with rounded edges.

Fig. 7 illustrates a schematic representation of angle-selective out-coupling elements in various angles according to an embodiment.

In the embodiment of Fig. 7 three angle-selective out-coupling elements 110 at different distances 711 from the in-coupling region 201 are illustrated. For the angle-selective out-coupling element 110 closest to the in-coupling region 210 out of the three, the angle 710 between the short axis 302 and the main propagation direction 210 is the largest. The angle 710 is then smaller for the angle-selective out-coupling element 110 further away from the in-coupling region 210 and the angle is substantially zero for the angle-selective out-coupling element 110 furthest away from the in-coupling region 210.

According to an embodiment, for each angle-selective out-coupling element 110, an absolute value of the angle 710 between the short axis 302 of the angle-selective out-coupling element 110 and the main propagation direction 210 is in the range 0 - 80 degrees or in the range 0 - 60 degrees.

Alternatively, for each angle-selective out-coupling element 110, an absolute value of the angle 710 between the short axis 302 of the angle-selective out-coupling element 110 and the main propagation direction 210 is in the range 0 - 75 degrees, in the range 0 - 70 degrees, in the range 0 - 65 degrees, in the range 0 - 55 degrees, or in the range 0 - 50 degrees.

The angle 710 between the short axis 302 of the angle-selective out-coupling element 110 and the main propagation direction 210 may be in the plane of the light guide plate 101.

According to claimed invention, for each angle-selective out-coupling element 110, a ratio of a dimension 303 of the angle-selective out-coupling element 110 along the long axis 301 to a dimension 304 of the angle-selective out-coupling element 110 along the short axis 302 is a function of the distance 711 of the angle-selective out-coupling element 110 from the in-coupling region 201.

For example, for angle-selective out-coupling elements 110 closest to the in-coupling region 201, the absolute value of the angle 710 between the short axis 302 of the angle-selective out-coupling element 110 and the main propagation direction 210 may be in the range 50 - 70 degrees, such as approximately 60 degrees.

According to an embodiment, for angle-selective out-coupling elements 110 further away from the in-coupling region than a threshold distance, the absolute value of the angle 710 between the short axis 302 of each angle-selective out-coupling element 110 and the main propagation direction 210 decreases as a function of the distance 711 of the angle-selective out-coupling element from the in-coupling region 201.

The threshold distance may correspond to, for example, the location of the first order crosshatch.

For example, the absolute value of the angle 710 between the short axis 302 of each angle-selective out-coupling element 110 and the main propagation direction 210 may increase as a function of distance from the in-coupling region 201 before the threshold distance. Alternatively or additionally, the absolute value of the angle 710 may reach a maximum at the threshold distance. Alternatively or additionally, the absolute value of the angle 710 may decrease as a function of distance from the in-coupling region 201 after the threshold distance.

The angle 710 may not need to change as a function of the distance 711 from the in-coupling region 201 for the whole illumination region 200. For example, sufficiently far away from the in-coupling region 201, the mura effect may be negligible, and therefore, the angle 710 may be constant.

According to an embodiment, an absolute value of the angle 710 between the short axis 302 of each angle-selective out-coupling element 110 and the main propagation direction 210 is constant in a direction perpendicular to the main propagation direction 210 for at least a part of the illumination region 200.

For example, the absolute value of the angle 710 between the short axis 302 of each angle-selective out-coupling element 110 and the main propagation direction 210 may be constant in a direction perpendicular to the main propagation direction 210 for a middle part of the illumination region 200. The middle part may refer to a part of the illumination region 200 that is delimited in the direction perpendicular to the main propagation direction 210 by the outmost light sources in the plurality of light sources 203. Outside the middle part, it may be beneficial to alter the angle 710 in a different fashion due to the edges of the light guide plate 201 and the lack of light sources outside the middle part affecting the propagation of the light.

According to an embodiment, the out-coupling arrangement 103 further comprises a plurality of non-angle-selective out-coupling elements protruding from the first main surface 104 of the light guide plate 101, each non-angle-selective out-coupling element being configured to out-couple light from the light guide plate 101 via refraction at side surfaces of the non-angle-selective out-coupling element.

For example, the non-angle-selective out-coupling elements may have a circular shape in the plane of the light guide plate 101. Thus, the non-angle-selective out-coupling elements may out-couple light from the light guide plate 101 in an isotropic manner. The concentration of the non-angle-selective out-coupling elements may vary as a function of distance from the in-coupling region 201 and/or in a direction perpendicular to the main propagation direction 210.

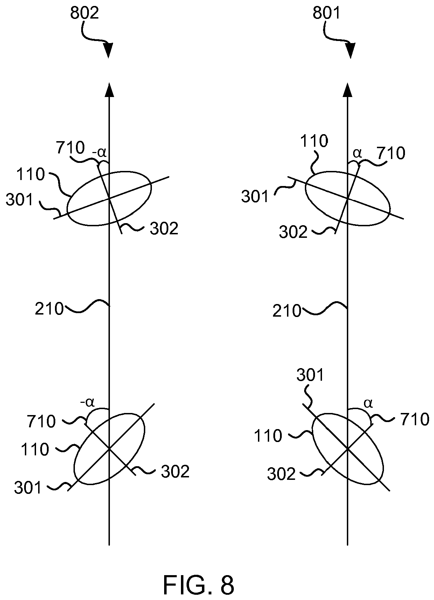

Fig. 8 illustrates a schematic representation of angle-selective out-coupling elements in positive and negative angles according to an embodiment.

According to an embodiment, the plurality of angle-selective out-coupling elements 110 comprises a first subset 801 of angle-selective out-coupling elements for which the angle 710 between the short axis 302 and the main propagation direction 210 is positive and a second subset 802 of angle-selective out-coupling elements for which the angle 710 between the short axis 302 and the main propagation 210 direction is negative.

The sign of the angle 710 between the short axis 302 and the main propagation 210 direction may be, for example, random for each angle-selective out-coupling element 110 or the sign may alternate between the angle-selective out-coupling elements 110 in the direction perpendicular to the main propagation direction 210.

Herein, the sign of the angle 710 between the short axis 302 and the main propagation direction 210 indicates the direction of the angle. For example, in the embodiment of Fig. 8, a positive angle is measured clockwise, and negative angle is measured counter-clockwise. Consequently, when referring to an absolute value of the angle 710 between the short axis 302 and the main propagation direction 210, this does not limit in which direction the angle is measured.

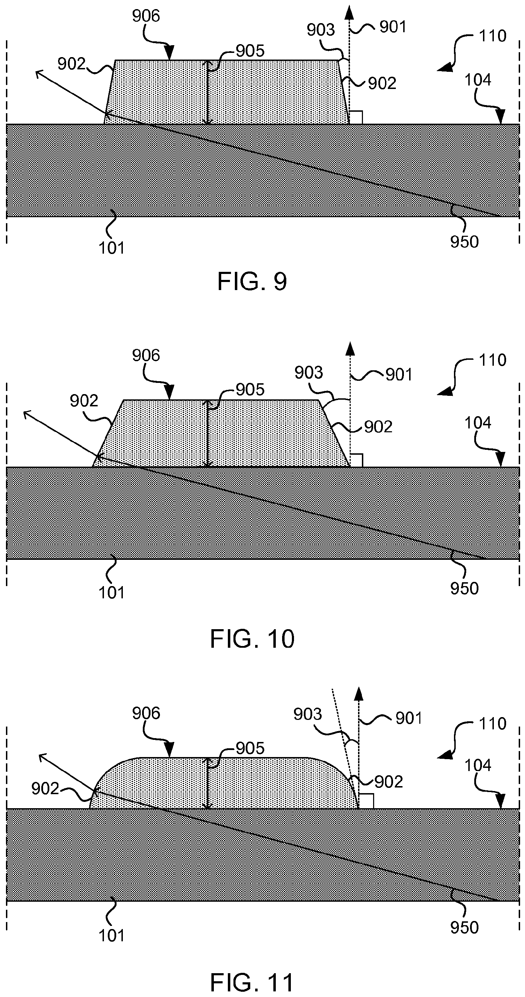

Fig. 9 illustrates a cross-sectional representation of an angle-selective out-coupling element according to an embodiment.

According to an embodiment, an angle 903 between a normal vector 901 of the first main surface 104 of the light guide plate 101 and the side surfaces 902 of each angle-selective out-coupling element 110 is in the range 0 - 45 degrees.

Alternatively, the angle 903 between a normal vector 901 of the first main surface 104 and the side surfaces 902 of each angle-selective out-coupling element 110 may be in the range 0 - 40 degrees, in the range 0 - 35 degrees, in the range 0 - 30 degrees, in the range 0 - 25 degrees in the range 0 - 20 degrees, or in the range 0 - 15 degrees. The minimum of the angle 903 may be limited by the used manufacturing method.

The height 905 of each angle-selective out-coupling element 110 may be in the order of few micrometres. Here, "height" refers to the dimension of each angle-selective out-coupling element 110 in the direction of the normal vector 901 of the first main surface 104. For example, the height 905 of each angle-selective out-coupling element 110 may be in the range 1 - 10 µm, in the range 1 - 8 µm, in the range 1 - 5 µm, in the range 1 - 2 µm, or in the range 1.5 - 2 µm.

It may be beneficial to configure the height 905 of each angle-selective out-coupling element 110 in such a way that the light 950 propagating in the light guide plate 101 does not hit the top surface 906 of the angle-selective out-coupling element 110, since this can cause the light to reflect instead of out-coupling.

In some embodiments, the top surface 906 may not be parallel with the first main surface 104. Instead, the angle-selective out-coupling element 110 may form, for example, a wedge-like structure, where the height 905 is less closer to the in-coupling region 201 than further away from the in-coupling region 201.

The angle-selective out-coupling elements 110 may be manufactured using, for example, a lithography method, such as laser lithography or electron-beam lithography. Alternatively, the angle-selective out-coupling elements 110 may be manufactured using, for example, laser etching, laser ablation, injection moulding, ultraviolet imprinting, and/or hot embossing. The ultraviolet imprinting and/or hot embossing may be implemented using roll-to-roll, plate-to-plate, and/or roll-to-plate methods.

For example, a lithography method, such as those disclosed herein, may be used to manufacture a master plate. Based on the master plate, tools can be manufactured using, for example, electroforming. The tools can be used to manufacture the angle-selective out-coupling elements 110 via, for example, injection moulding, ultraviolet imprinting, and/or hot embossing. Alternatively or additionally, laser ablation can be used to manufacture the master plate, the tools and/or the angle-selective out-coupling elements 110. These are only examples of how the angle-selective out-coupling elements 110 can be manufactured and the angle-selective out-coupling elements 110 may also be manufactured in various other ways.

Fig. 10 illustrates a cross-sectional representation of an angle-selective out-coupling element according to another embodiment.

In the embodiment of Fig. 10, the angle 903 between the normal vector 901 of the first main surface 104 and the side surfaces 902 of the angle-selective out-coupling element 110 is greater than in the embodiment of Fig. 9.

Fig. 11 illustrates a cross-sectional representation of an angle-selective out-coupling element with curved sides according to an embodiment.

In some embodiments, the side surfaces 902 of the angle-selective out-coupling elements 110 may be non-planar. For example, in the embodiment of Fig. 11, the side surfaces 902 are curved. In such embodiments, the angle 903 between the normal vector 901 of the first main surface 104 and the side surfaces 902 of the angle-selective out-coupling elements 110 can be measured at a bottom of the side surfaces 902. Here, the bottom of the side surfaces 902 refers to the section of the side surfaces 902 where the side surfaces 902 meet the first main surface 104. An example of such an angle 903 is illustrated in the embodiment of Fig. 11.

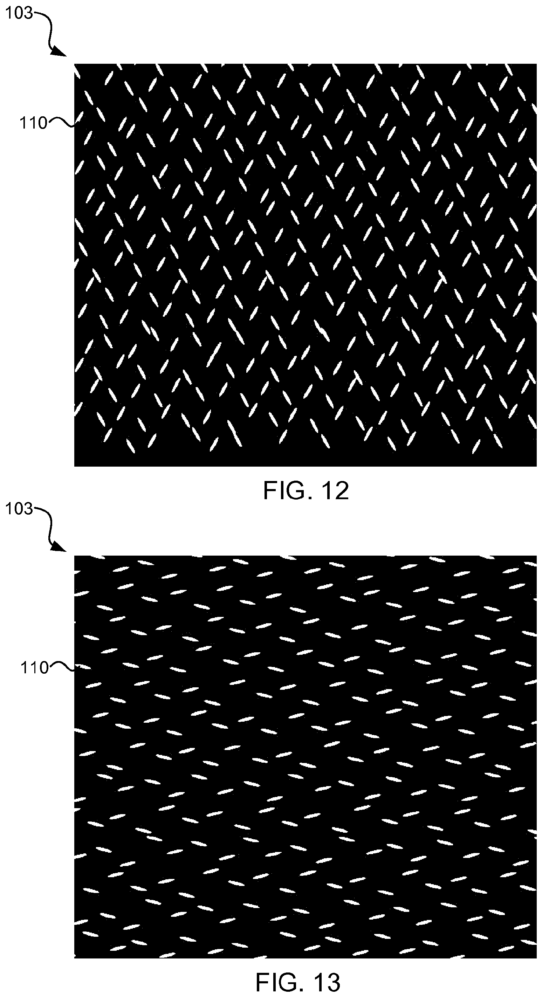

Fig. 12 illustrates a schematic representation of an out-coupling arrangement comprising angle-selective out-coupling elements according to an embodiment.

The embodiment of Fig. 12 illustrates an out-coupling arrangement 103 comprising angle-selective out-coupling elements 110. The angle-selective out-coupling elements 110 have an oval shape and the angle 710 between the short axis 302 of some angle-selective out-coupling elements 110 and the main propagation direction 210 is positive and the angle 710 between the short axis 302 of some angle-selective out-coupling elements 110 and the main propagation direction 210 is negative.

Fig. 13 illustrates a schematic representation of an out-coupling arrangement comprising angle-selective out-coupling elements according to another embodiment.

The embodiment of Fig. 13 illustrates an out-coupling arrangement 103 comprising angle-selective out-coupling elements 110. The angle-selective out-coupling elements 110 have an oval shape and the angle 710 between the short axis 302 of some angle-selective out-coupling elements 110 and the main propagation direction 210 is positive and the angle 710 between the short axis 302 of some angle-selective out-coupling elements 110 and the main propagation direction 210 is negative.

Compared to the embodiment of Fig. 12, in the embodiment of Fig. 13, the absolute value of the angle 710 between the short axis 302 of the angle-selective out-coupling elements 110 and the main propagation direction 210 is less.

The embodiment of Fig. 12 and Fig. 13 may be implemented in the same out-coupling arrangement 103. For example, the embodiment of Fig. 12 may illustrate the out-coupling arrangement 103 closer to the in-coupling region 201 while the embodiment of Fig. 13 may illustrate the out-coupling arrangement 103 further away from the in-coupling region 201.

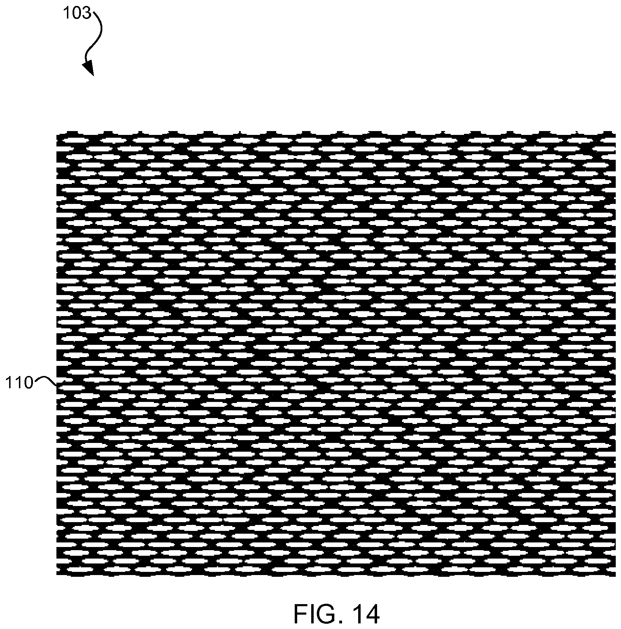

Fig. 14 illustrates a schematic representation of an out-coupling arrangement comprising angle-selective out-coupling elements according to another embodiment.

The embodiment of Fig. 13 illustrates an out-coupling arrangement 103 comprising angle-selective out-coupling elements 110. The angle-selective out-coupling elements 110 have an oval shape and the angle 710 between the short axis 302 of some angle-selective out-coupling elements 110 and the main propagation direction 210 is positive and the angle 710 between the short axis 302 of some angle-selective out-coupling elements 110 and the main propagation direction 210 is negative.

Compared to the embodiment of Fig. 12 and Fig. 13, in the embodiment of Fig. 14, the concentration of the angle-selective out-coupling elements 110 has increased, and the absolute value of the angle 710 between the short axis 302 of the angle-selective out-coupling elements 110 and the main propagation direction 210 has decreased further.

The embodiment of Figs. 12 - 14 may be implemented in the same out-coupling arrangement 103. For example, the embodiment of Fig. 12 may illustrate the out-coupling arrangement 103 closer to the in-coupling region 201, the embodiment of Fig. 13 may illustrate the out-coupling arrangement 103 further away from the in-coupling region 201, and the embodiment of Fig. 14 may illustrate the out-coupling arrangement 103 furthest from the in-coupling region 201.

According to an embodiment, a concentration of the angle-selective out-coupling elements 110 changes as a function of a distance from the in-coupling region 201.

Herein, the concentration of the angle-selective out-coupling elements 110 may refer to the number of angle-selective out-coupling elements 110 per unit area.

By having the concentration of the angle-selective out-coupling elements 110 be a function of the distance from the in-coupling region 201, the distribution of the light out-coupled via the out-coupling arrangement 103 can be made more even along the main propagation direction 210 by reducing the crosshatch effect.

According to an embodiment, a concentration of the angle-selective out-coupling elements 110 increases as a function of the distance from the in-coupling region 201.

According to an embodiment, a concentration of the angle-selective out-coupling elements 110 varies in a direction perpendicular to the main propagation direction 210.

Any range or device value given herein may be extended or altered without losing the effect sought. Also any embodiment may be combined with another embodiment unless explicitly disallowed.

Although the subject matter has been described in language specific to structural features and/or acts, it is to be understood that
the specific features or acts described above are only limited by the subject matter defined in the appended claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the scope of the subject matter described herein.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of appended claims.

## Claims

1. A light guide (100) for display illumination, comprising:
a light guide plate (101) with an in-coupling region (201) for coupling light from a plurality of light sources (203) into the light guide plate (101) enabling the light to propagate inside the light guide plate (101) along at least a main propagation direction (210), and an illumination region (200), the light guide plate (101) having a first main surface (104) and a second main surface (105) opposite to the first main surface (104) and separated therefrom by a thickness of the light guide plate (101), and
an out-coupling arrangement (103) for coupling at least part of the light propagating in the light guide plate (101), and interacting with the out-coupling arrangement (103), out of the light guide plate in the illumination region (200), wherein the out-coupling arrangement (103) comprises a plurality of angle-selective out-coupling elements (110) protruding from the first main surface (104) of the light guide plate (101), each angle-selective out-coupling element (110) having a long axis (301) and a short axis (302) in a plane of the light guide plate (101) and being configured to out-couple light from the light guide plate (101) via refraction at side surfaces (902) of the angle-selective out-coupling element (110), wherein an angle (710) between the short axis (302) of each angle-selective out-coupling element (110) and the main propagation direction (210) changes as a function of a distance (711) of the angle-selective out-coupling element (110) from the in-coupling region (201);
**characterized in that** an absolute value of the angle (710) between the short axis (302) of each angle-selective out-coupling element (110) and the main propagation direction (210) is constant in a direction perpendicular to the main propagation direction (210) for at least a part of the illumination region (200).

2. The light guide (100) according to claim 1, wherein each angle-selective out-coupling element (110) has a substantially oval, a substantially rectangular, a substantially triangular, a substantially quadrilateral, or a substantially rhombus shape in the plane of the light guide plate (101).

3. The light guide (100) according to claim 1 or claim 2, wherein for each angle-selective out-coupling element (110), a ratio of a dimension (303) of the angle-selective out-coupling element (110) along the long axis (301) to a dimension (304) of the angle-selective out-coupling element (110) along the short axis (302) is greater than three, greater than four, and/or greater than five.

4. The light guide (100) according to any preceding claim, wherein for each angle-selective out-coupling element (110), a ratio of a dimension (303) of the angle-selective out-coupling element along the long axis (301) to a dimension (304) of the angle-selective out-coupling element along the short axis (302) changes as a function of the distance (711) of the angle-selective out-coupling element (110) from the in-coupling region (201).

5. The light guide (100) according to any preceding claim, wherein the plurality of angle-selective out-coupling elements (110) comprises a first subset (801) of angle-selective out-coupling elements for which the angle (710) between the short axis (302) and the main propagation direction (210) is positive and a second subset (802) of angle-selective out-coupling elements for which the angle (710) between the short axis (302) and the main propagation direction (210) is negative.

6. The light guide (100) according to any preceding claim, wherein for each angle-selective out-coupling element (110), an absolute value of the angle (710) between the short axis (302) of the angle-selective out-coupling element (110) and the main propagation direction (210) is in the range 0 - 80 degrees or in the range 0 - 60 degrees.

7. The light guide (100) according to any preceding claim, wherein for angle-selective out-coupling elements (110) further away from the in-coupling region (201) than a threshold distance, the absolute value of the angle (710) between the short axis (302) of each angle-selective out-coupling element (110) and the main propagation direction (210) decreases as a function of the distance (711) of the angle-selective out-coupling element (110) from the in-coupling region (201).

8. The light guide (100) according to any preceding claim, wherein an angle (903) between a normal vector (901) of the first main surface (104) of the light guide plate (101) and the side surfaces (902) of each angle-selective out-coupling element (110) is in the range 0 - 45 degrees.

9. The light guide (100) according to any preceding claim, wherein a concentration of the angle-selective out-coupling elements (110) changes as a function of a distance from the in-coupling region (201).

10. The light guide (100) according to any preceding claim, wherein a concentration of the angle-selective out-coupling elements (110) increases as a function of the distance from the in-coupling region (201).

11. The light guide (100) according to any preceding claim, wherein a concentration of the angle-selective out-coupling elements (110) varies in a direction perpendicular to the main propagation direction (210).

12. The light guide (100) according to any preceding claim, wherein the light guide plate (101) comprises polycarbonate, polylactic acid, poly(methyl methacrylate), and/or polyethylene terephthalate.

13. The light guide (100) according to any preceding claim, wherein each angle-selective out-coupling element (110) comprise an ultraviolet-curing material.

14. The light guide (100) according to any preceding claim, wherein the out-coupling arrangement (103) further comprises a plurality of non-angle-selective out-coupling elements protruding from the first main surface (104) of the light guide plate (101), each non-angle-selective out-coupling element being configured to out-couple light from the light guide plate (101) via refraction at side surfaces of the non-angle-selective out-coupling element.

15. A display arrangement comprising a display element and the light guide (100) according to any preceding claim for illuminating the display element.

## Patentansprüche

1. Lichtleiter (100) zur Bildschirmbeleuchtung, umfassend:
eine Lichtleiterplatte (101) mit einer Einkopplungsregion (201) zum Koppeln von Licht von einer Mehrzahl von Lichtquellen (203) in die Lichtleiterplatte (101), wodurch es dem Licht ermöglicht wird, sich im Inneren der Lichtleiterplatte (101) entlang mindestens einer Hauptausbreitungsrichtung (210) auszubreiten, und eine Beleuchtungsregion (200), wobei die Lichtleiterplatte (101) eine erste Hauptoberfläche (104) und eine der ersten Hauptoberfläche (104) gegenüberliegende und durch eine Dicke der Lichtleiterplatte (101) davon getrennte zweite Hauptoberfläche (105) aufweist, und
eine Auskopplungsanordnung (103) zum Auskoppeln von mindestens einem Teil des Lichts, das sich in der Lichtleiterplatte (101) ausbreitet, und mit der Auskopplungsanordnung (103) interagiert, aus der Lichtleiterplatte in der Beleuchtungsregion (200), wobei die Auskopplungsanordnung (103) eine Mehrzahl von winkelselektiven Auskopplungselementen (110) umfasst, die von der ersten Hauptoberfläche (104) der Lichtleiterplatte (101) hervorstehen, wobei jedes winkelselektive Auskopplungselement (110) eine lange Achse (301) und eine kurze Achse (302) in einer Ebene der Lichtleiterplatte (101) aufweist und dazu konfiguriert ist, Licht aus der Lichtleiterplatte (101) über Brechung an Seitenoberflächen (902) des winkelselektiven Auskopplungselements (110) auszukoppeln, wobei sich ein Winkel (710) zwischen der kurzen Achse (302) jedes winkelselektiven Auskopplungselements (110) und der Hauptausbreitungsrichtung (210) als eine Funktion eines Abstands (711) des winkelselektiven Auskopplungselements (110) von der Einkopplungsregion (201) ändert;
**dadurch gekennzeichnet, dass** ein Absolutwert des Winkels (710) zwischen der kurzen Achse (302) jedes winkelselektiven Auskopplungselements (110) und der Hauptausbreitungsrichtung (210) in einer Richtung orthogonal zu der Hauptausbreitungsrichtung (210) für mindestens einen Teil der Beleuchtungsregion (200) konstant ist.

2. Lichtleiter (100) nach Anspruch 1, wobei jedes winkelselektive Auskopplungselement (110) eine im Wesentlichen ovale, eine im Wesentlichen rechteckige, eine im Wesentlichen dreieckige, eine im Wesentlichen viereckige oder eine im Wesentlichen rautenförmige Form in der Ebene der Lichtleiterplatte (101) aufweist.

3. Lichtleiter (100) nach Anspruch 1 oder Anspruch 2, wobei für jedes winkelselektive Auskopplungselement (110) ein Verhältnis einer Dimension (303) des winkelselektiven Auskopplungselements (110) entlang der langen Achse (301) zu einer Dimension (304) des winkelselektiven Auskopplungselements (110) entlang der kurzen Achse (302) größer als drei, größer als vier und/oder größer als fünf ist.

4. Lichtleiter (100) nach einem der vorhergehenden Ansprüche, wobei sich für jedes winkelselektive Auskopplungselement (110) ein Verhältnis einer Dimension (303) des winkelselektiven Auskopplungselements entlang der langen Achse (301) zu einer Dimension (304) des winkelselektiven Auskopplungselements entlang der kurzen Achse (302) als Funktion des Abstands (711) des winkelselektiven Auskopplungselements (110) von der Einkopplungsregion (201) ändert.

5. Lichtleiter (100) nach einem der vorhergehenden Ansprüche, wobei die Mehrzahl von winkelselektiven Auskopplungselementen (110) eine erste Teilmenge (801) von winkelselektiven Auskopplungselementen, für die der Winkel (710) zwischen der kurzen Achse (302) und der Hauptausbreitungsrichtung (210) positiv ist, und eine zweite Teilmenge (802) von winkelselektiven Auskopplungselementen, für die der Winkel (710) zwischen der kurzen Achse (302) und der Hauptausbreitungsrichtung (210) negativ ist, umfasst.

6. Lichtleiter (100) nach einem der vorhergehenden Ansprüche, wobei für jedes winkelselektive Auskopplungselement (110) ein Absolutwert des Winkels (710) zwischen der kurzen Achse (302) des winkelselektiven Auskopplungselements (110) und der Hauptausbreitungsrichtung (210) in dem Bereich 0 - 80 Grad oder in dem Bereich 0 - 60 Grad liegt.

7. Lichtleiter (100) nach einem der vorhergehenden Ansprüche, wobei für winkelselektive Auskopplungselemente (110), die weiter von der Einkopplungsregion (201) entfernt sind als ein Schwellenabstand, der Absolutwert des Winkels (710) zwischen der kurzen Achse (302) jedes winkelselektiven Auskopplungselements (110) und der Hauptausbreitungsrichtung (210) als Funktion des Abstands (711) des winkelselektiven Auskopplungselements (110) von der Einkopplungsregion (201) abnimmt.

8. Lichtleiter (100) nach einem der vorhergehenden Ansprüche, wobei ein Winkel (903) zwischen einem Normalenvektor (901) der ersten Hauptoberfläche (104) der Lichtleiterplatte (101) und den Seitenoberflächen (902) jedes winkelselektiven Auskopplungselements (110) in dem Bereich 0 - 45 Grad liegt.

9. Lichtleiter (100) nach einem der vorhergehenden Ansprüche, wobei sich eine Konzentration der winkelselektiven Auskopplungselemente (110) als Funktion eines Abstands von der Einkopplungsregion (201) ändert.

10. Lichtleiter (100) nach einem der vorhergehenden Ansprüche, wobei eine Konzentration der winkelselektiven Auskopplungselemente (110) als Funktion des Abstands von der Einkopplungsregion (201) zunimmt.

11. Lichtleiter (100) nach einem der vorhergehenden Ansprüche, wobei eine Konzentration der winkelselektiven Auskopplungselemente (110) in einer Richtung orthogonal zu der Hauptausbreitungsrichtung (210) variiert.

12. Lichtleiter (100) nach einem der vorhergehenden Ansprüche, wobei die Lichtleiterplatte (101) Polycarbonat, Polymilchsäure, Poly(methylmethacrylat) und/oder Polyethylenterephthalat umfasst.

13. Lichtleiter (100) nach einem der vorhergehenden Ansprüche, wobei jedes winkelselektive Auskopplungselement (110) ein ultraviolett-härtendes Material umfasst.

14. Lichtleiter (100) nach einem der vorhergehenden Ansprüche, wobei die Auskopplungsanordnung (103) ferner eine Mehrzahl von nicht-winkelselektiven Auskopplungselementen umfasst, die von der ersten Hauptoberfläche (104) der Lichtleiterplatte (101) hervorstehen, wobei jedes nicht-winkelselektive Auskopplungselement dazu konfiguriert ist, Licht aus der Lichtleiterplatte (101) über Brechung an Seitenoberflächen des nicht-winkelselektiven Auskopplungselements auszukoppeln.

15. Bildschirmanordnung, umfassend ein Bildschirmelement und den Lichtleiter (100) nach einem der vorhergehenden Ansprüche zum Beleuchten des Bildschirmelements.

## Revendications

1. Guide de lumière (100) pour un éclairage d'affichage, comprenant :
une plaque de guide de lumière (101) dotée d'une région de couplage d'entrée (201) pour le couplage d'une lumière provenant d'une pluralité de sources de lumière (203) dans la plaque de guide de lumière (101) permettant à la lumière de se propager à l'intérieur de la plaque de guide de lumière (101) le long d'au moins une direction de propagation principale (210), et une région d'éclairage (200), la plaque de guide de lumière (101) présentant une première surface principale (104) et une deuxième surface principale (105) opposée à la première surface principale (104) et séparée de celle-ci par une épaisseur de la plaque de guide de lumière (101), et
un agencement de couplage de sortie (103) pour le couplage d'au moins une partie de la lumière se propageant dans la plaque de guide de lumière (101), et interagissant avec l'agencement de couplage de sortie (103), en sortie de la plaque de guide de lumière dans la région d'éclairage (200), dans lequel l'agencement de couplage de sortie (103) comprend une pluralité d'éléments de couplage de sortie angulairement sélectifs (110) faisant saillie à partir de la première surface principale (104) de la plaque de guide de lumière (101), chaque élément de couplage de sortie angulairement sélectif (110) présentant un axe long (301) et un axe court (302) dans un plan de la plaque de guide de lumière (101) et étant configuré pour coupler en sortie une lumière provenant de la plaque de guide de lumière (101) par l'intermédiaire d'une réfraction au niveau de surfaces latérales (902) de l'élément de couplage de sortie angulairement sélectif (110), dans lequel un angle (710) entre l'axe court (302) de chaque élément de couplage de sortie angulairement sélectif (110) et la direction de propagation principale (210) change en fonction d'une distance (711) de l'élément de couplage de sortie angulairement sélectif (110) par rapport à la région de couplage d'entrée (201) ;
**caractérisé en ce qu'**une valeur absolue de l'angle (710) entre l'axe court (302) de chaque élément de couplage de sortie angulairement sélectif (110) et la direction de propagation principale (210) est constante dans une direction perpendiculaire à la direction de propagation principale (210) pour au moins une partie de la région d'éclairage (200).

2. Guide de lumière (100) selon la revendication 1, dans lequel chaque élément de couplage de sortie angulairement sélectif (110) présente une forme sensiblement ovale, sensiblement rectangulaire, sensiblement triangulaire, sensiblement quadrilatérale ou sensiblement en losange dans le plan de la plaque de guide de lumière (101).

3. Guide de lumière (100) selon la revendication 1 ou la revendication 2, dans lequel, pour chaque élément de couplage de sortie angulairement sélectif (110), un rapport d'une dimension (303) de l'élément de couplage de sortie angulairement sélectif (110) le long de l'axe long (301) sur une dimension (304) de l'élément de couplage de sortie angulairement sélectif (110) le long de l'axe court (302) est supérieur à trois, supérieur à quatre, et/ou supérieur à cinq.

4. Guide de lumière (100) selon une quelconque revendication précédente, dans lequel, pour chaque élément de couplage de sortie angulairement sélectif (110), un rapport d'une dimension (303) de l'élément de couplage de sortie angulairement sélectif le long de l'axe long (301) sur une dimension (304) de l'élément de couplage de sortie angulairement sélectif le long de l'axe court (302) change en fonction de la distance (711) de l'élément de couplage de sortie angulairement sélectif (110) par rapport à la région de couplage d'entrée (201).

5. Guide de lumière (100) selon une quelconque revendication précédente, dans lequel la pluralité d'éléments de couplage de sortie angulairement sélectifs (110) comprend un premier sous-ensemble (801) d'éléments de couplage de sortie angulairement sélectifs pour lesquels l'angle (710) entre l'axe court (302) et la direction de propagation principale (210) est positif et un deuxième sous-ensemble (802) d'éléments de couplage de sortie angulairement sélectifs pour lesquels l'angle (710) entre l'axe court (302) et la direction de propagation principale (210) est négatif.

6. Guide de lumière (100) selon une quelconque revendication précédente, dans lequel, pour chaque élément de couplage de sortie angulairement sélectif (110), une valeur absolue de l'angle (710) entre l'axe court (302) de l'élément de couplage de sortie angulairement sélectif (110) et la direction de propagation principale (210) est dans la plage de 0 à 80 degrés ou dans la plage de 0 à 60 degrés.

7. Guide de lumière (100) selon une quelconque revendication précédente, dans lequel, pour des éléments de couplage de sortie angulairement sélectifs (110) plus éloignés de la région de couplage d'entrée (201) qu'une distance seuil, la valeur absolue de l'angle (710) entre l'axe court (302) de chaque élément de couplage de sortie angulairement sélectif (110) et la direction de propagation principale (210) diminue en fonction de la distance (711) de l'élément de couplage de sortie angulairement sélectif (110) par rapport à la région de couplage d'entrée (201).

8. Guide de lumière (100) selon une quelconque revendication précédente, dans lequel un angle (903) entre un vecteur normal (901) de la première surface principale (104) de la plaque de guide de lumière (101) et les surfaces latérales (902) de chaque élément de couplage de sortie angulairement sélectif (110) est dans la plage de 0 à 45 degrés.

9. Guide de lumière (100) selon une quelconque revendication précédente, dans lequel une concentration des éléments de couplage de sortie angulairement sélectifs (110) change en fonction d'une distance par rapport à la région de couplage d'entrée (201).

10. Guide de lumière (100) selon une quelconque revendication précédente, dans lequel une concentration des éléments de couplage de sortie angulairement sélectifs (110) augmente en fonction de la distance par rapport à la région de couplage d'entrée (201).

11. Guide de lumière (100) selon une quelconque revendication précédente, dans lequel une concentration des éléments de couplage de sortie angulairement sélectifs (110) varie dans une direction perpendiculaire à la direction de propagation principale (210).

12. Guide de lumière (100) selon une quelconque revendication précédente, dans lequel la plaque de guide de lumière (101) comprend du polycarbonate, du poly(acide lactique), du poly(méthacrylate de méthyle), et/ou du poly(téréphtalate d'éthylène).

13. Guide de lumière (100) selon une quelconque revendication précédente, dans lequel chaque élément de couplage de sortie angulairement sélectif (110) comprend un matériau durcissable aux ultraviolets.

14. Guide de lumière (100) selon une quelconque revendication précédente, dans lequel l'agencement de couplage de sortie (103) comprend en outre une pluralité d'éléments de couplage de sortie non angulairement sélectifs faisant saillie à partir de la première surface principale (104) de la plaque de guide de lumière (101), chaque élément de couplage de sortie non angulairement sélectif étant configuré pour coupler en sortie une lumière provenant de la plaque de guide de lumière (101) par l'intermédiaire d'une réfraction au niveau de surfaces latérales de l'élément de couplage de sortie non angulairement sélectif.

15. Agencement d'affichage comprenant un élément d'affichage et le guide de lumière (100) selon une quelconque revendication précédente pour l'éclairage de l'élément d'affichage.
